Europäisches Patentamt

European Patent Office

Office européen des brevets

(19)

(11) Veröffentlichungsnummer: **0 103 859**

**B1**

(12) EUROPÄISCHE PATENTSCHRIFT

(45) Veröffentlichungstag der Patentschrift:
03.02.88

(21) Anmeldenummer: **83109152.5**

(22) Anmeldetag: **16.09.83**

(51) Int. Cl.⁴: **G 05 D 23/19, F 24 D 19/10**

(54) Verfahren zur Steuerung der Vor- oder Rücklauftemperatur einer von einer Wärmequelle gespeisten Heizungsanlage.

(30) Priorität: **21.09.82 DE 8226517 U**

(43) Veröffentlichungstag der Anmeldung:
**28.03.84 Patentblatt 84/13**

(45) Bekanntmachung des Hinweises auf die Patenterteilung:
**03.02.88 Patentblatt 88/5**

(84) Benannte Vertragsstaaten:
**AT BE CH DE FR GB IT LI LU NL SE**

(56) Entgegenhaltungen:
**DE-A-2 811 153**
**DE-A-2 908 147**
**DE-A-2 937 318**
**DE-A-3 000 124**

(73) Patentinhaber: **Joh. Vaillant GmbH u. Co.,
Berghauser Strasse 40 Postfach 10 10 20, D-5630
Remscheid 1 (DE)**

(72) Erfinder: **Sieg, Reinhard, Bergisch Born 106 B,
D-5630 Remscheid 11 (DE)**

(74) Vertreter: **Heim, Johann- Ludwig, c/o Joh. Vaillant
GmbH u. Co Postfach 10 10 20 Berghauser
Strasse 40, D-5630 Remscheid 1 (DE)**

EP 0 103 859 B1

## Beschreibung

Die vorliegende Erfindung bezieht sich auf ein Verfahren zur Steuerung einer Vor- oder Rücklauftemperatur oder einer davon abgeleiteten Temperatur eines in einer Heizungsanlage zirkulierenden Heizmediums gemäß dem Oberbegriff des Patentanspruchs, das aus der DE-A-2 937 318 bekannt ist.

Solche Steuervorrichtungen weisen in aller Regel einen Sollwertgeber auf, dem als einziger Istwert die Außentemperatur zugeführt wird mit dem Ziel, an seinem Ausgang eine variable Spannung für einen Regler abzugeben, mit dem eine der Außentemperatur mehr oder weniger proportionale Vorlauftemperatur (Heizkurve) dem Regler als Sollwert vorgegeben wird. Es ist hierbei möglich, an dem Sollwertgeber Glieder vorzusehen, an denen man Werte für den hiervon ableitbaren Raumtemperatursollwert, die Anlagenbelastung und den Vorlauftemperatursollwert abgreifen und darstellen kann.

Solche Steuervorrichtungen werden häufig mit einer Minimalbegrenzung versehen, das bedeutet, daß die Vorlauftemperatur oder Heizkurve oder Anlagenbelastung nicht unter einen Minimumwert fallen kann, und zwar unabhängig von der herrschenden Außentemperatur. Das bedeutet aber, daß die von der Heizungsanlage zu beheizenden Räume dann überheizt werden, wenn der Minimalbegrenzungswert oberhalb der Heizkurve liegt. Insbesondere tritt dieser Fall bei Nachtabsenkung auf.

Der vorliegenden Erfindung liegt mithin die Aufgabe zugrunde, die Auswirkungen aus einer möglichen Überheizung der Räume aufgrund einer positiven Differenz der Werte zwischen Minimalbegrenzung und Heizkurve in bezug auf das Wohlbefinden der Bewohner der Räume, die von der Heizungsanlage beheizt werden, zu minimieren beziehungsweise den Energieverbrauch für die Beheizung des Gebäudes ohne negative Behaglichkeitsauswirkungen so klein wie möglich zu halten.

Die Lösung dieser Aufgabe gelingt mit den kennzeichenden Merkmalen des Anspruchs.

Ausführungsbeispiele der Erfindung gehen aus der Beschreibung und den Zeichnungen hervor.

Es zeigen:

Figur 1 eine Prinzipdarstellung einer Heizungsanlage,

Figur 2 ein Diagramm mit der Abhängigkeit der Vorlauftemperatur von der Außentemperatur,

Figur 3 die Variation der Vorlauftemperatur von der Außentemperatur, wobei die Sollraumtemperatur Parameter ist, Figur 4 die Variation der Vorlauftemperatur in Abhängigkeit von der Anlagenbelastung,

Figur 5 die Variation der Vorlauftemperatur wiederum abhängig von der Außentemperatur,

Figur 6 eine Schaltung zur Erklärung der Vorgänge nach Figur zwei,

Figur 7 eine weitere Schaltung zur Erklärung der Vorgänge nach Figur drei,

Figur 8 eine dritte Schaltung zur Erklärung der Vorgänge nach Figur 4 und Figur 9 ein weiteres Ausführungsbeispiel der Erfindung zur Erklärung der Vorgänge nach Figur fünf.

In allen 9 Figuren bedeuten gleiche Bezugszeichen jeweils die gleichen Einzelheiten.

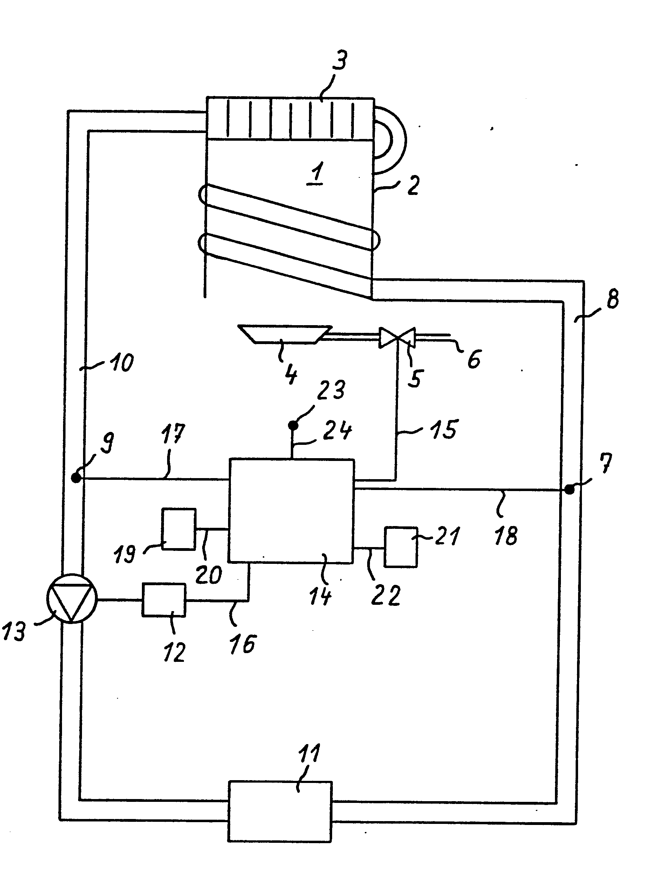

Die Heizungsanlage gemäß Figur 1 weist eine Wärmequelle 1 auf, die aus einem Heizschacht 2 besteht, der an seinem oberen Ende einen Kupferwärmetauscher 3 aufweist. Der Heizschacht 2 ist von einem Brenner 4 beheizt, der über eine mit einem Magnetventil 5 versehene Brennstoffzuleitung 6 gespeist ist. Die Wärmequelle 1 ist an einem mit einem Rücklauftemperaturfühler 7 versehene Rücklaufleitung 8 angeschlossen, das in der Wärmequelle 1 erwärmte Wasser wird über eine mit einem Vorlauftemperaturfühler 9 versehene Vorlaufleitung 10 abgeführt und zu einem Verbraucher 11, an den die Rücklaufleitung 8 angeschlossen ist, mittels einer von einem Motor 12 angetriebenen Umwälzpumpe 13 gefördert.

Es ist eine zentrale Steuervorrichtung 14 - im folgenden Sollwertgeber genannt - vorgesehen, die Stellbefehle über eine Leitung 15 auf das als Gasmagnetventil ausgeführte Magnetventil 5 sowie über eine weitere Leitung 16 an den Antriebsmotor 12 der Pumpe gibt. Über Meßleitungen 17 und 18 sind Vor- und Rücklauftemperaturfühler 7 und 9 auf den Sollwertgeber 14 geschaltet. Weiterhin ist eine Einstellhandhabe 19 vorgesehen, die über eine Leitung 20 mit dem Sollwertgeber 14 verbunden ist, an der ein Minimalbegrenzungswert für die Vorlauftemperatur eingestellt werden kann. Schließlich ist ein weiteres Einstellglied 21 vorgesehen, das über eine Stelleitung 22 mit dem Sollwertgeber 14 verbunden ist, mit der ein Solltiefwert der Steuervorrichtung vorgegeben werden kann. Schließlich ist ein Außentemperaturfühler 23 vorgesehen, der über eine Meßleitung 24 unmittelbar mit dem Sollwertgeber 14 verbunden ist. Der Sollwertgeber 14 setzt die Werte der Außentemperatur, gemessen mit dem Außentemperaturfühler 23, in Vorlauftemperaturwerte um, gibt also eine Heizkurve vor.

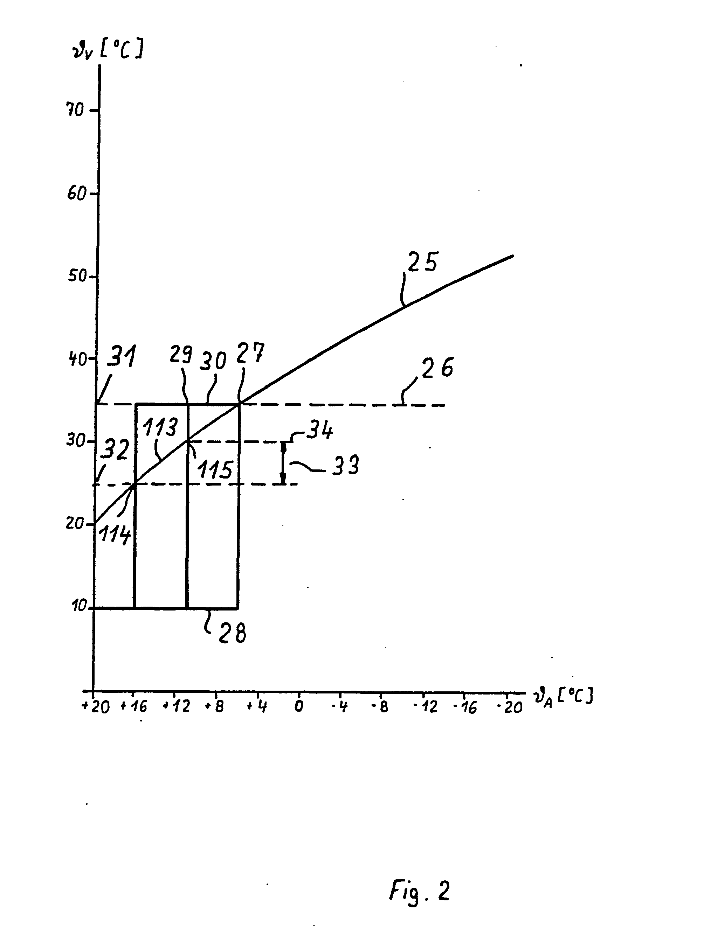

Diese Vorgänge gehen aus der Figur 2 in ihrer Auswirkung hervor. In der Figur 2 ist in der Abszisse die Außentemperatur $\vartheta_A$ mit Werten von +20 bis -20°C dargestellt, in der Ordinate die Vorlauftemperatur $\vartheta_V$ gleichermaßen in °C, beginnend mit 10 bis 70°. Je nach herrschenden klimatischen oder vom Verbraucher gewünschten Heizungsverhältnissen sind auch andere Werte vorgebbar. Somit ergibt sich, von tiefen Außentemperaturen und zugehörigen hohen Vorlauftemperaturen her gesehen, zunächst eine Kurve 25 als Heizkurve, das heißt eine starre Zuordnung von Vorlauftemperaturwerten zu herrschenden Außentemperaturwerten. Das bedeutet übertragen auf die Figur 1, daß Pumpe

13 und Gasmagnetventil 5 von dem Sollwertgeber 14 so gesteuert werden, daß bestimmte Vorlauftemperaturwerte in Abhängigkeit von der Außentemperatur automatisch erzielt werden. Zur Sicherheit können diese Vorlauftemperaturwerte durch den Vorlauftemperaturfühler 9 überwacht werden. Es wäre gleichermaßen möglich, die Steuerung auf die Rücklauftemperatur abzustellen, wobei diese Rücklauftemperatur-Sollwerte durch den Fühler 7 überwacht werden.

Andererseits ist über den Einsteller 19 für den Minimalbegrenzungswert ein Minimumwert der Vorlauftemperatur $\vartheta_V$ vorgegeben, was der Kurve 26 entspricht. Das bedeutet, daß oberhalb von Vorlauftemperaturwerten entsprechend der Kurve 26 die Heizkurve 25 gesteuert wird, daß aber der Wert der Kurve 26 aus Korrosionsgründen innerhalb der Wärmequelle 1 eigentlich nicht unterfahren werden sollte. Steigt nun, ausgehend von einem bestimmten Zustand, für den die in der Figur 2 dargestellte Heizkurve 25 Geltung finden soll, die Außentemperatur, so bedeutet das, daß die Heizkurve in Richtung nach links unten von der Steuervorrichtung abgefahren wird, und zwar so lange, bis die Heizkurve im Punkt 27 den Minimalbegrenzungswert gemäß der Kurve 26 erreicht. Nunmehr bestehen folgende Möglichkeiten:

Bei Gleichheit zwischen den Sollwerten der Heizkurve und der Minimalbegrenzung könnte durch den Sollwertgeber 14 ein Solltiefwert gemäß der Kurve 28 geschaltet werden, der demgemäß nach der Darstellung der Figur 2 für Außentemperaturen von größer als 5°C einen Vorlauftemperaturtiefwert von 10° vorgeben wird. Damit wird praktisch eine Ausschaltung der Wärmequelle 1 erreicht, das heißt ein Schließen des Gasmagnetventils 5 und ein Stillsetzen der Pumpe 13. Das bedeutet aber daß dem Verbraucher ein zu geringes Wärmeangebot im Bereich aller Heizkörper 11 angeboten wird, eigentlich wird zum Beispiel bei einem Außentemperaturwert von 8°C noch eine Vorlauf temperatur von 33°C gefordert. Die Vorlauftemperatur von 33°C soll aber mit Rücksicht auf die Taupunktkorrosion innerhalb der Wärmequelle 1 nicht erzeugt werden.

Somit könnte man demgemäß, ausgehend von tiefen Außentemperaturen, zunächst den Kurvenzug 25 bis zum Punkt 27 fahren und anschließend den Solltiefwert gemäß der Kurve 28 fahren, das gleiche auch in umgekehrter Richtung. Will man aber dem Verbraucher bessere Komfortbedingungen bieten, so wird, ausgehend vom Punkt 27, zunächst bis zu einem Punkt 29, der frei wählbar ist, die Kurve 26 im Kurvenstück 30 weiter abgefahren. Das bedeutet, daß dem Verbraucher eigentlich zuviel Wärme angeboten wird, da ja die Heizkurventemperatur durch den Minimalbegrenzungswert überschritten wird. Je nach Auslegung der Heizungsanlage und der Verbraucher 11 beziehungsweise der Regelgüte der dort in der Regel vorgeschalteten Thermostatventile wirkt sich dieser Bereich mehr oder weniger aus. Man kann innerhalb des Sollwertgebers festlegen, daß zum Beispiel - vergleiche wiederum Figur 2 - zwischen Vorlauftemperaturwerten von 25 bis 35° entsprechend den Punkten 31 und 32 die Möglichkeit vorgesehen wird, auf Wunsch den Solltiefwert gemäß der Kurve 28 dem des Sollwertgebers 14 aufzudrücken.

Weiterhin ist es möglich, eine Aufschaltung des Solltiefwertes für einen Bereich 33 vorzusehen, der sich erstreckt von dem Ordinatenpunkt 32 bis zu einem Ordinatenpunkt 34 und bei Ordinatenwerten zwischen dem Punkt 34 und dem Punkt 31 die Minimalbegrenzung anbieten. Somit würde der Sollwert der Vorlauftemperatur zunächst aus der Kurve 25 bis zum Punkt 27 dann aus der Kurve 30 bis zum Punkt 29 bestehen. Im Punkt 29 würde der Solltiefwert gemäß der Kurve 28 eingeschaltet werden, was einem Außerbetriebsetzen der Heizungsanlage entspricht.

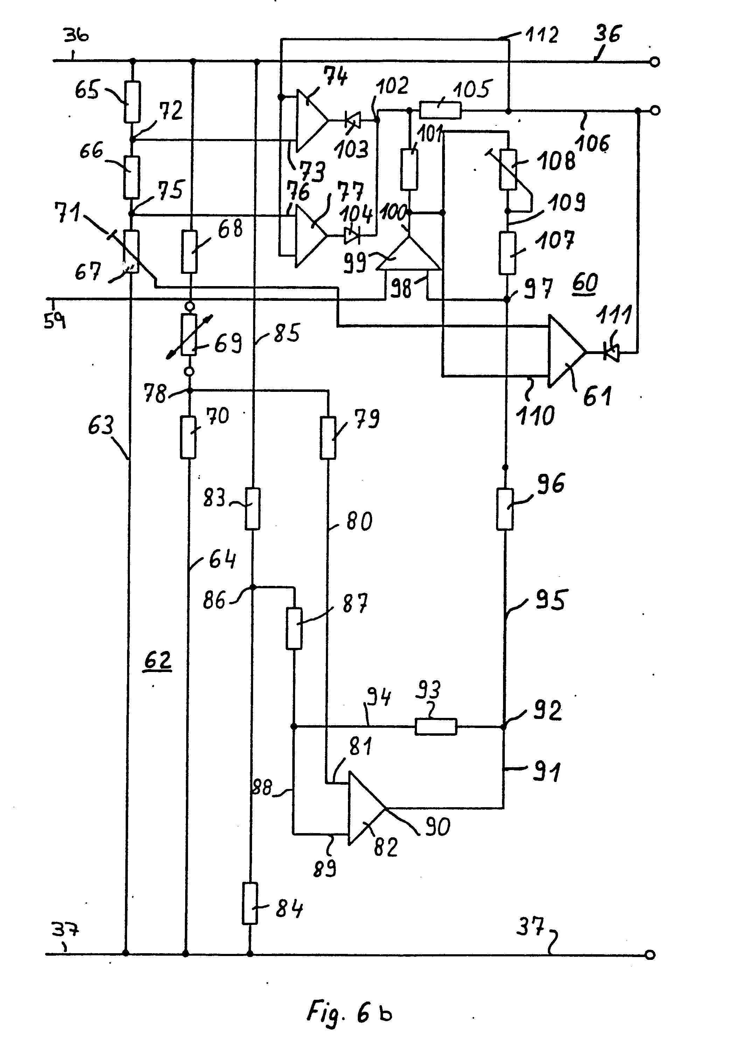

Um die Arbeitsweise des Sollwertgebers 14 näher zu verdeutlichen, wird nunmehr auf die Figur 6 zurückgegriffen, die die Schaltung des Sollwertgebers darstellt. Der Sollwertgeber liegt zunächst über Leitungen 36 und 37 an einer Versorgungsgleichspannung. An diese beiden Leitungen ist eine Brückenschaltung 38 angeschlossen, die aus Ästen 39 und 40 besteht, wobei der Ast 39 in seinem einen Zweig einen Widerstand 41 und seinem zweiten Zweig eine Serienschaltung zweier Widerstände 42 und 43 aufweist, wobei der Widerstand 43 einstellbar ist und den Raumtemperatursollwert vorgibt. Der zweite Ast 40 besteht aus der Serienschaltung dreier Widerstände 44, 45 und 46, wobei ein Schleifer 47 am Widerstand 45 die beiden Zweige voneinander trennt. Der Schleifer 47 dient nur zur Nullpunkteinstellung des an die Brückendiagonale über Leitungen 48 und 49, in denen sich Widerstände 50 und 51 befinden, angeschlossenen Operationsverstärkers 52. Ein Ausgang 53 des Operationsverstärkers ist über einen Widerstand 54 auf den einen Eingang, und zwar den der Leitung 48, gegengekoppelt. An den Ausgang 53 ist weiterhin eine Serienschaltung von zwei Widerständen 55 und 56 angeschlossen, wobei der Widerstand 56 über eine Leitung 57 mit der Leitung 37 verbunden ist. Der Widerstand 55 weist einen Schleifer 58 auf, der über eine Leitung 59 an einen Eingang eines Komparators angeschlossen ist. Schleifer 48 dient der Fußpunkteinstellung des Raumtemperatursollwerts. Die Verhältnisse sind so gehalten, daß zum Beispiel mit dem Schleifer 58 ein Raumtemperatursollwert von 20° eingestellt werden kann. Dann kann durch Variation des Wertes des Widerstandes 43 durch Betätigen des Schleifers um diesen Raumtemperatursollwert ein Bereich von 5°C größer oder kleiner vorgegeben werden.

An die Leitungen 36 und 37 ist eine weitere Brückenschaltung 62 angeschlossen, die aus Ästen 63 und 64 besteht. Der Ast 63 besteht aus der Serienschaltung dreier Widerstände 65, 66 und 67, der Brückenast 64 aus der Serienschaltung dreier Widerstände 68, 69 und 70. Die Widerstände 65, 66 und 68, 70 sind Festwiderstände. Der Widerstand 67 ist einstellbar, mit seinem Schleifer 71 können die Vorlauftemperaturschaltwerte 31 beziehungsweise 34 und 32 vom Benutzer vorgegeben werden. Der Widerstand 69 ist der Außentemperatur-Istwertfühler, entspricht demgemäß dem Fühler 23 in Figur 1. Der Verbindungspunkt 72 zwischen den Widerständen 65 und 66 ist mit einem Eingang 73 eines Komparators 74 verbunden, der Verbindungspunkt 75 zwischen den Widerständen 66 und 71 ist mit einem Eingang 76 eines weiteren Komparators 77 verbunden. Der Widerstand 68 ist unmittelbar an die Leitung 36 angeschlossen, der Verbindungspunkt 78 zwischen den Widerständen 69 und 70 ist über eine mit einem Widerstand 79 versehene Leitung 80 an einen Eingang 81 eines Operationsverstärkers 82 angeschlossen. Die Leitungen 36 und 37 sind über eine mit Widerständen 83 und 84 versehene Leitung 85 miteinander verbunden, wobei der Verbindungspunkt 86 beider Widerstände über eine mit einem Widerstand 87 versehene Leitung 88 mit dem anderen Eingang 89 des Operationsverstärkers 82 verbunden ist. Der Ausgang 90 des Operationsverstärkers 82 ist über eine Leitung 91 mit einem Verteilungspunkt 92 verbunden, von dem eine mit einem Widerstand 93 versehene Leitung 94 zur Leitung 88 und eine weitere Leitung 95, die mit einem Widerstand 96 versehen ist, zu einem weiteren Verzweigungspunkt 97 führt. An den Verzweigungspunkt 97 ist einmal ein Eingang 98 eines Operationsverstärkers 99 angebunden, dessen zweiter Eingang von der Leitung 59 gebildet wird. Ein Ausgang 100 dieses Operationsverstärkers 99 ist über einen Widerstand 101 mit einem Verzweigungspunkt 102 verbunden. An den Verzweigungspunkt 102 sind über je eine Diode 103 beziehungsweise 104, die antiparallel geschaltet sind, die Ausgänge der Komparatoren 74 und 77 angeschlossen. Der Verzweigungspunkt 102 ist über eine mit einem Widerstand 105 versehene Leitung 106 verbunden, auf der ein Ausgangssignal für die Steuervorrichtung 14 abgegriffen werden kann. Das elektrische Signal auf der Leitung 106 ist ein direktes Abbild der Sollvorlauftemperatur, die über den Fühler 9 gemessen werden könnte.

Vom Verzweigungspunkt 97 geht eine mit einer Serienschaltung zweier Widerstände 107 und 108, von denen einer justierbar ist, versehene Leitung 109 ab, die einmal mit dem Ausgang des Operationsverstärkers 99 und zum zweiten mit einem Eingang 110 des Komparators 61 verbunden ist, dessen anderer Eingang vom Schleifer 71 gebildet ist. Im Ausgang des Komparators 61 liegt eine in Sperrichtung geschaltete Diode 111, die auf der anderen Seite, mit der Leitung 106 verbunden ist.

Von der Leitung 106 geht eine Leitung 112 ab, die zu den jeweils anderen Eingängen der Komparatoren 74 und 77 führt.

Die in der Figur 6 dargestellte Schaltung weist folgende Funktionen auf: Durch die beiden Potentiometer 43 und 58 kann eine Raumsolltemperatur eingestellt werden, wobei der Sollwert als Spannungswert auf der Leitung 59 und damit auf dem entsprechenden Eingang des als Verstärker wirkenden Operationsverstärkers 99 anliegt. Die Unterteilung des Raumtemperatursollwertes in zwei Widerstände hat den Vorteil, daß man am Gehäuse des Sollwertgebers die Handhabe für den Schleifer 58 anbringen kann und einen Grundsollwert voreinstellen kann, während über ein Fernbedienungsgerät, was das Potentiometer 43 aufweist, der Grundsollwert um bestimmte Werte nach oben und unten variiert werden kann.

Am Punkt 78 des Brückenastes 64 entsteht eine Spannung, die dem Istwert der Außentemperatur proportional ist. Diese Spannung liegt am Eingang 81 des Operationsverstärkers 82 und wird hier verstärkt. Somit liegt am Punkt 92 ein Spannungssignal an, das linear proportional mit der Außentemperatur variabel ist. Dieses Spannungssignal liegt aber über dem Punkt 97 auch am Operationsverstärker 99 an, an dem gleichermaßen der Raumtemperatursollwert über die Leitung 59 anliegt. Die Differenz wird verstärkt und steht somit als Spannungssignal auf der Leitung 106 zur Verfügung, und hier wird bewirkt, daß sich der Vorlauftemperatursollwert nahezu proportional mit der Außentemperatur ändert. Ein Verstellen des Raumtemperatursollwertes durch Betätigen der Widerstände 43 oder 58 bewirkt eine Verschiebung der Kurve 25 parallel zu sich selber. Die Kurve 26 kommt durch den Widerstandswert des Widerstandes 66 zustande. Im Ausführungsbeispiel ist der Widerstand 66 als Festwert vorgegeben und führt zu einer Minimalbegrenzung von 35° C. Soll die Minimalbegrenzung einstellbar sein, müßte dieser Widerstand einstellbar sein. Der Widerstand 65 dient einer hier nicht weiter interessierenden Maximalbegrenzung, damit die Vorlauftemperatur nicht über einen Maximumwert hinauslaufen kann. Der Spannungswert der Minimalbegrenzung liegt am Eingang 76 des Komparators 77 an, dessen anderer Eingang mit dem Ausgangssignal der Leitung 106 verbunden ist. Solange das Signal der Leitung 106 größer ist als das Minimumbegrenzungssignal, wird letzteres unterdrückt, weil der Komparator für diesen Fall gesperrt ist. Überschreitet hingegen das Minimumbegrenzungssignal in seiner Höhe den Spannungswert auf der Leitung 106, so schaltet der Komparator durch und schaltet den Minimumbegrenzungswert auf die Leitung 106, so daß somit die Kurve 30 entsteht.

Am Widerstand 67 kann nun der Schaltpunkt eingestellt werden, bei dessen Erreichen sowohl die Heizkurve als auch der Minimalbegrenzungswert unterdrückt werden können, so daß die Steuervorrichtung auf den Solltiefwert 28 schaltet. Somit kann im Bereich des Kurvenzuges 113, der vom Punkt 114 bis zum Punkt 27 auf der Kurve 25 zustande kommt, ein Punkt, beispielsweise der Punkt 115, eingestellt werden, ab dem das Ausgangssignal der Leitung 106 von der Minimalbegrenzung, das heißt der Kurve 30, auf den Solltiefwert gemäß der Kurve 28 herunterspringt. Das kommt dadurch zustande, daß der am Widerstand 67 eingestellte Wert einen bestimmten Spannungswert auf den Eingang 60 des Komparators 61 schaltet. Wenn dieser Wert gleich wird dem Ausgangswert des Operationsverstärkers 99, so kippt der Komparator 61 und gibt ein so niedriges Potential auf die Leitung 106, daß die Heizungsanlage praktisch ausgeschaltet wird.

Bei absinkenden Außentemperaturen arbeitet die Schaltung in anderer Richtung, aber ansonsten gleich. Die Heizungsanlage würde dann am selben Vorlauftemperaturpunkt einschalten, und zwar dann auf einen Wert der Kurve 30. Die Kurve 30 würde bis zum Punkt 27 abgefahren werden, anschließend würde die Heizkurve gemäß der Kurve 25 gefahren werden, was sich durch ein Ausschalten entsprechender Spannungswerte auf die Leitung 106 äußert.

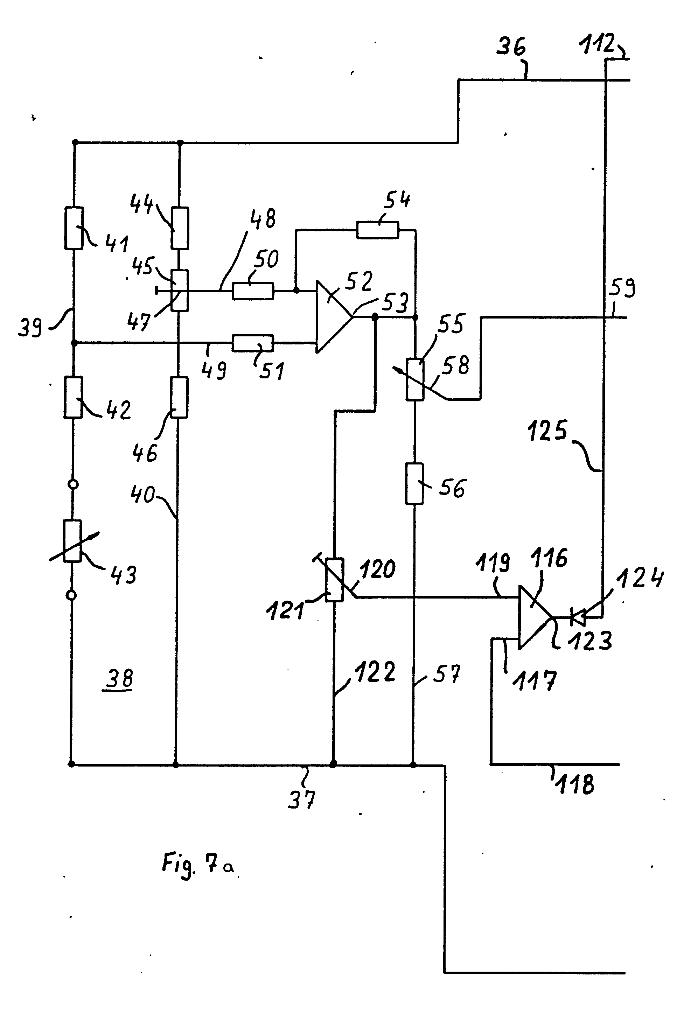

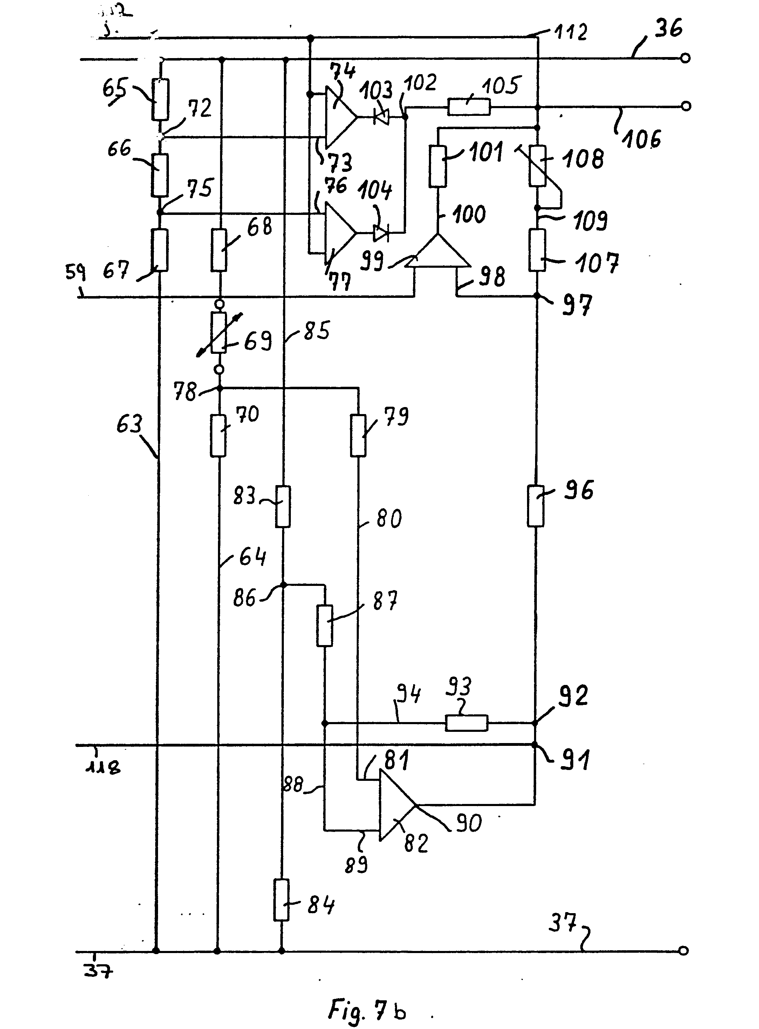

Beim Ausführungsbeispiel gemäß Figur 7 ist die Schaltung gemäß Figur 6 soweit abgewandelt, als daß der Komparator 61 fehlt, statt dessen ist ein Komparator 116 vorgesehen, dessen einer Eingang 117 über eine Leitung 118 mit der Leitung 91 verbunden ist und dessen anderer Eingang 119 an einen Schleifer 120 eines Widerstandes 121 angeschlossen, der im Zuge einer Leitung 122 liegt, die sich von der Leitung 37 zum Ausgang 53 des Operationsverstärkers 52 erstreckt.

In den Ausgang 123 des Komparators 116 ist eine in Sperrichtung geschaltete Diode 124 geschaltet, die im Zuge einer Leitung 125 angeordnet ist, die mit der Leitung 112 verbunden ist.

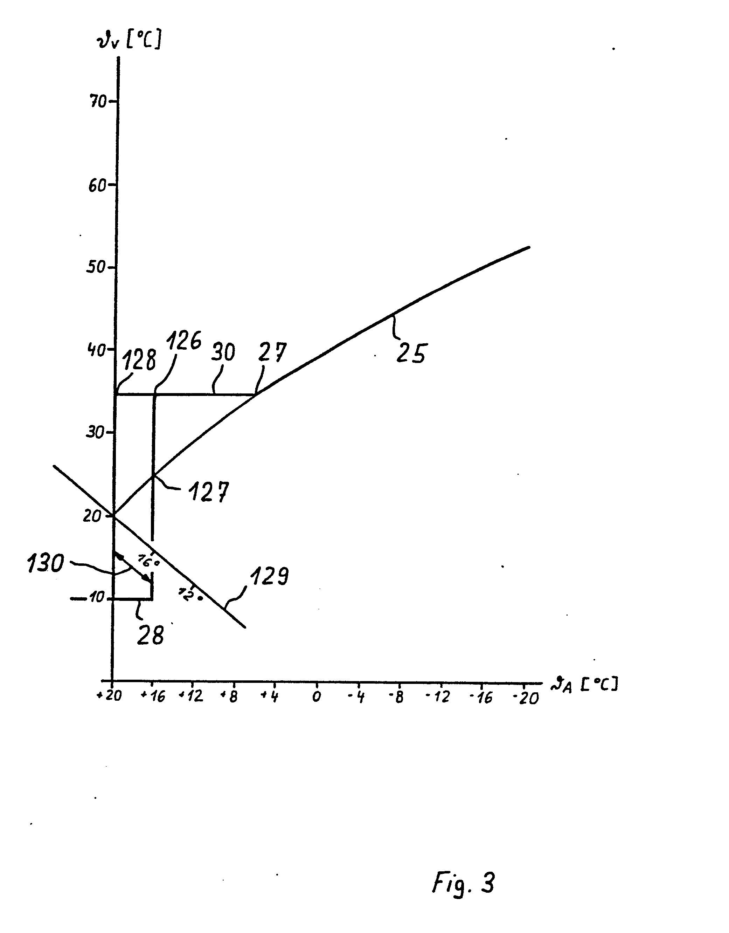

Die Funktion dieser Schaltung soll anhand der Figur 3 erklärt werden.

Am Eingang 117 des Komparators 116 steht über die Leitung 118, wie bereits früher beschrieben, der Außentemperaturistwert in verstärkter Form an. Am Eingang 119 steht ein mit dem Raumtemperatursollwert proportional variabler Spannungswert an. Im Komparator werden beide Werte verglichen, solange der Spannungswert des Raumtemperatursollwerts geringer ist als der Spannungswert der Außentemperatur, wird die Heizkurve 25 abgefahren, und zwar von tiefen Außentemperaturen bis zum Punkt 27, an dem die Minimalbegrenzung entsprechend dem Kurvenzug 30 zur Wirkung kommt. In dem Moment, in dem die Raumsolltemperatur im Punkt 126 gleich wird der Heizkurventemperatur gemäß dem Punkt 127, kippt der Komparator 116, und die Anlage schaltet auf den Vorlauftemperaturtiefwert gemäß der Kurve 28. Der Widerstand 121 legt nun den Bereich fest, in dem der Punkt 126 in Höhe der Abszisse variieren kann. Sein Minimum liegt im Punkt 128, sein Maximum kann über den Punkt 126 erheblich hinausgehen. Je weiter man den Punkt 126 in Richtung auf den Punkt 128 legt, um so größer ist das Überheizen der Räume beziehungsweise die Energieverschwendung, je weiter man ihn an den Punkt 27 heranlegt, um so größer wird die Komforteinbuße. Zwischen diesen beiden extremen Werten gilt es einen Mittelwert zu finden, bei dem die Behaglichkeit einerseits groß genug ist und der Energiemehrverbrauch nicht allzu stark ins Gewicht fällt. Die Gerade 129 stellt die Raumsolltemperatur dar, eine Verstellung des Schleifers 120 des Widerstandes 121 bewirkt eine Verstellung in Richtung des Pfeils 130.

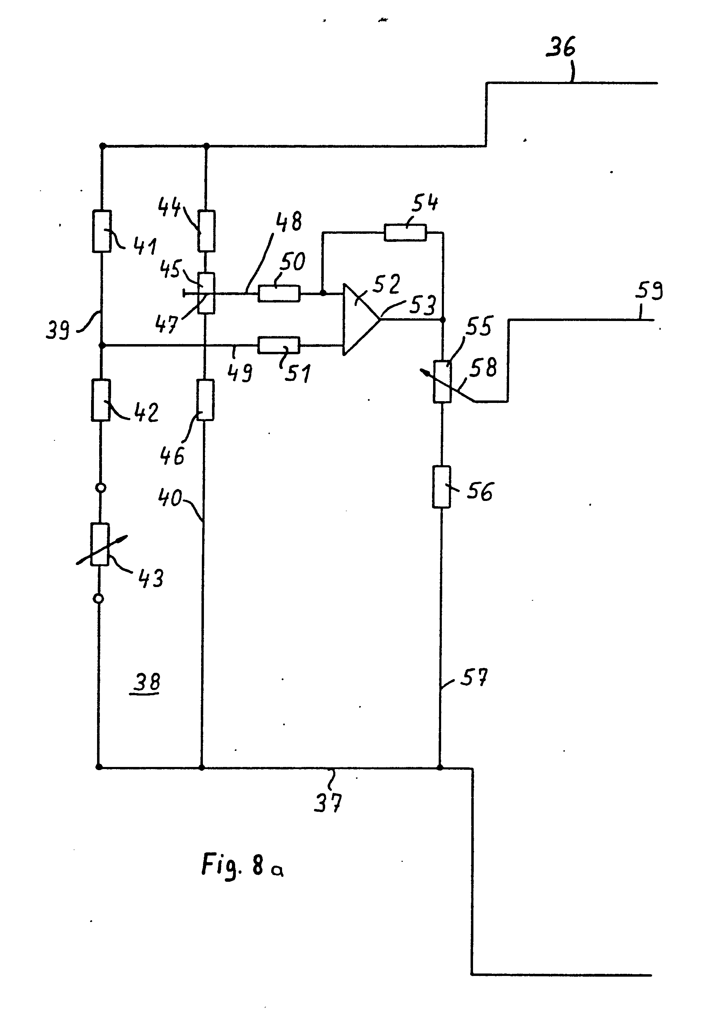

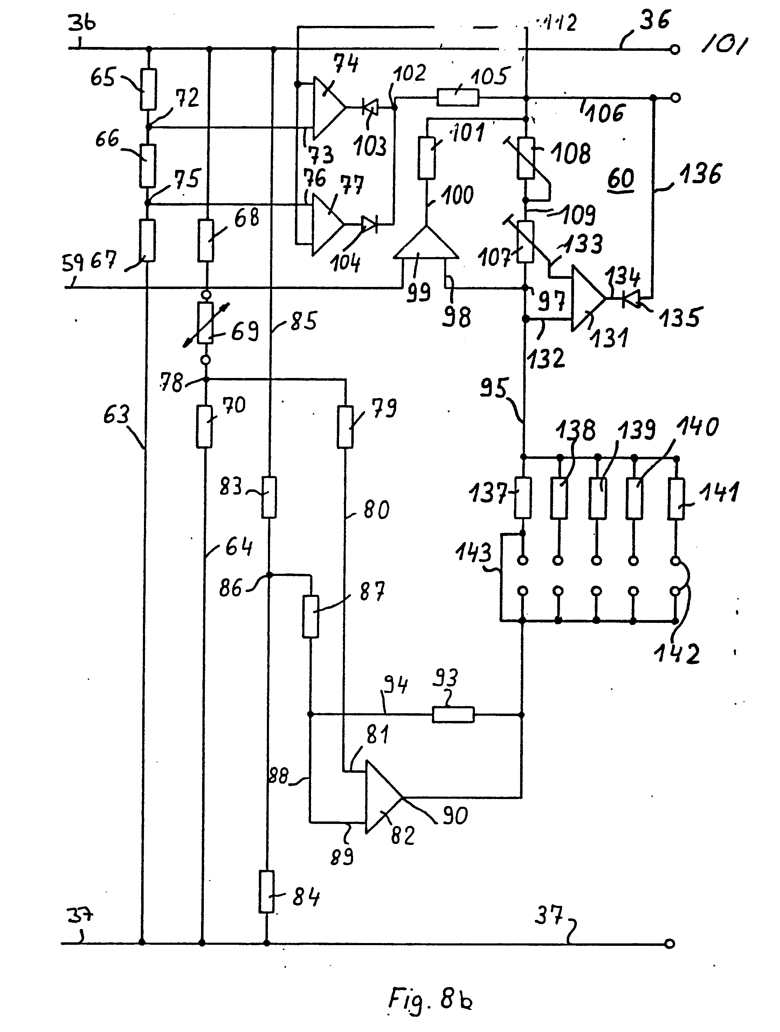

Das Ausführungsbeispiel gemäß Figur 8 unterscheidet sich von dem der Figur 6 im wesentlichen darin, daß wieder der Komparator 61 mit den Leitungen 60 und 110 sowie der Diode 111 fehlen und daß dafür ein Komparator 131 vorgesehen ist, dessen einer Eingang 132 mit der Leitung 95 verbunden ist und dessen anderer Eingang 133 an den als Schleiferwiderstand 107 ausgeführten Widerstand gelegt ist. In einen Ausgang 134 des Komparators 131 ist eine in Sperrichtung gepolte Diode 135 gelegt, die im Zuge einer mit der Leitung 106 verbundenen Leitung 136 angeordnet ist. Der Widerstand 96 ist in eine Parallelschaltung von 5 Widerständen 137, 138, 139, 140 und 141 aufgespalten, die alle im Zuge der Leitung 95 liegen. In Serie mit bereits einem der Widerstände liegt eine Unterbrechungsstelle, die von einer Brücke 142 überbrückbar ist. Die Brücke 143 für den Widerstand 137 ist immer vorhanden, eine weitere Brücke 142 wird im Bedarfsfall zusätzlich gelegt.

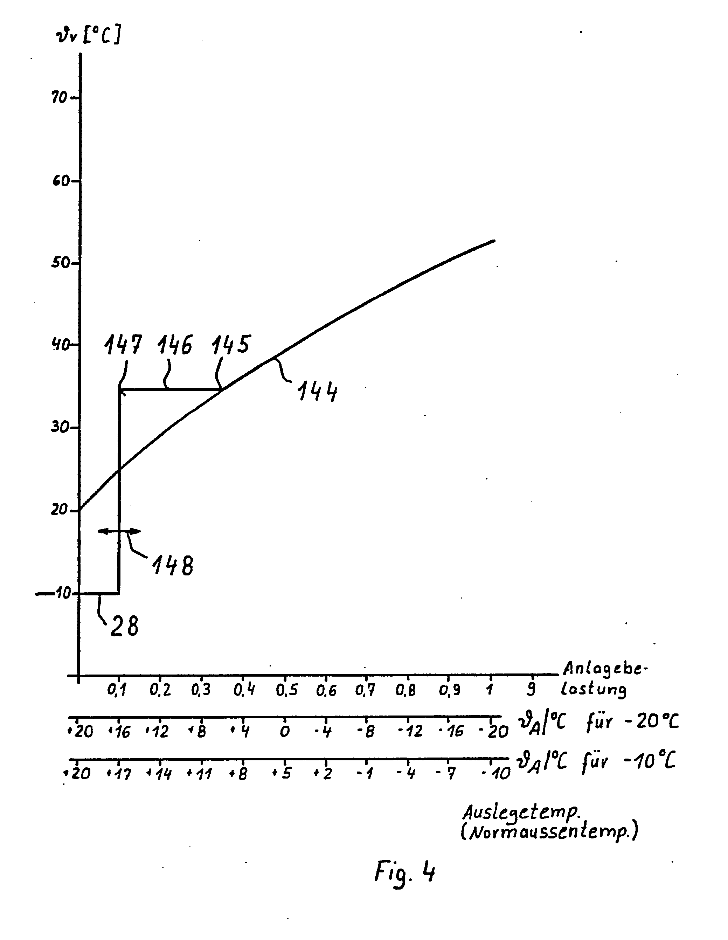

Die Funktion dieser Schaltung soll nun anhand des Diagramms der Figur 4 näher erläutert werden. In der Figur 4 sind in der Abszisse sowohl die Anlagenbelastung von 0 bis 1 als auch die Außentemperatur wie auch die Normaußentemperatur aufgetragen. Als Ordinate sind wieder die Werte für die Vorlauftemperatur und alles in °C aufgetragen. Die Normaußentemperatur ist die tiefste Außentemperatur, bei der die Anlagenbelastung 1 erreicht wird. Beim Ausführungsbeispiel ist die Heizungsanlage in Relation zum Verbraucher so gewählt worden, daß 100 % Anlagenbelastung einer Normaußentemperatur von -20°C zugeordnet werden (obere Skala), beziehungsweise die Anlagenbelastung von 100 % oder eins kann auch einer Normaußentemperatur von -10° zugeordnet werden (vergleiche untere Skala). Die Zuordnung von jeweils 100 % Anlagenbelastung zu einer bestimmten Normaußentemperatur geschieht durch das Einschalten einer der Brücken 142 in eine der Trennstellen, so daß in die Leitung 95 neben dem Widerstand 137 einer der weiteren Widerstände 138 bis 141 parallel geschaltet werden. Nunmehr wird der Außentemperaturistwert, der auf der Leitung 91 ansteht, dem einen Eingang 132 des Komparators 131 zugeführt, während dem anderen Eingang 133 ein Spannungswert zugeführt wird, der dem Vorlauftemperatursollwert entspricht. Durch den Schleifer des Widerstandes 107 wird hiervon ein Anteil abgegriffen, der den Anlagenbelastungsgrad repräsentiert.

Somit wird - ausgehend von tiefen Außentemperaturwerten - eine Belastungskurve 144 in Richtung auf einen Punkt 145 bei steigenden Außentemperaturen gefahren, wobei die Kurve 144 geometrisch ähnlich der Kurve 25 ist. Im Punkt 145 wird die Minimalbegrenzung wirksam, so daß sich eine waagerechte Kurve 146 ergibt. Das bedeutet, daß zunächst, ausgehend von einer Anlagenbelastung von eins, bei steigenden Außentemperaturen fallende Vorlauftemperaturwerte erzielt werden, bis durch die Minimalbegrenzung die Vorlauftemperatur von 35°C nicht unterschritten werden kann.

Sinkt die Anlagenbelastung beim Abfahren der Kurve 146 unter einen Wert entsprechend dem Punkt 147, im Ausführungsbeispiel unter 10 %, so wird der Komparator 131 zum Kippen gebracht. Er besitzt einen internen Grenzwerteinsteller, der dieses Kippen veranlaßt. Der Kippunkt 147 ist einstellbar mit dem Schleifer des Widerstandes 107. Somit ergibt sich durch Variation des Widerstandswertes des Widerstandes 107 ein Bereich 148, in dem der Punkt 147 einstellbar ist. Nach dem Kippen des Komparators wird negative Spannung auf die Leitung 106 geschaltet, so daß die Steuervorrichtung auf den Solltiefwert gemäß der Kurve 28 springt.

Im Ausführungsbeispiel der Figur 8 ist die Brücke 142 in Serie zum Widerstand 141 vorgesehen, somit ergibt sich als Diagramm die untere Skala der Abszisse. Wird die Brücke 142 entfernt, so gilt eine Normaußentemperatur von -20° entsprechend der mittleren Abszissenbeschriftung.

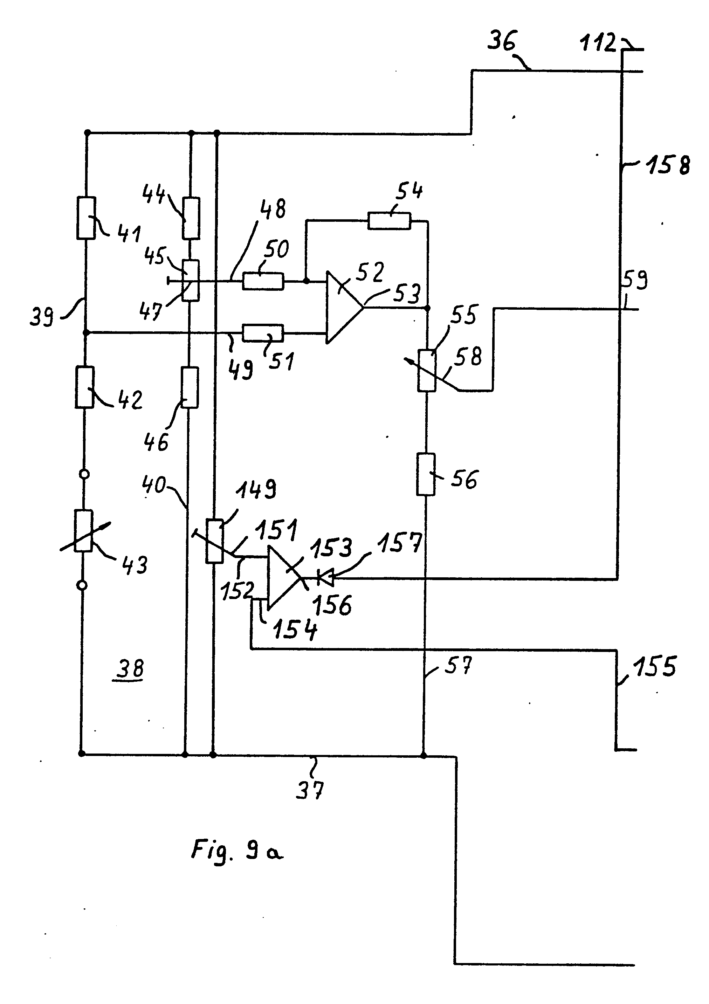

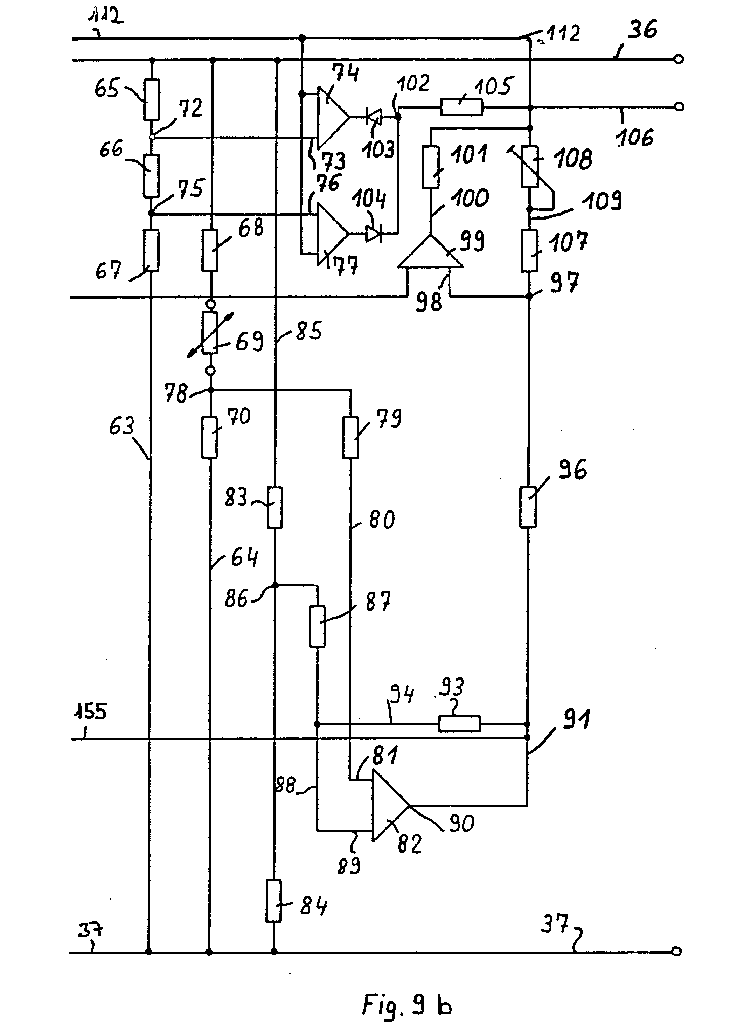

Beim Ausführungsbeispiel gemäß Figur 9 ist die Schaltung gemäß Figur 6 insoweit abgewandelt, als daß wieder der Komparator 61 mit seinen Leitungen 60 und 110 sowie der Diode 111 fehlt. Statt dessen sind die Leitungen 36 und 37 mit einer mit einem Schleiferwiderstand 149 versehenen Leitung 150 verbunden, wobei der Schleifer 151 des Widerstandes an einen Eingang 152 eines Komparators 153 gelegt ist, dessen anderer Eingang 154 mittels einer Leitung 155 mit der Leitung 91 verbunden ist. In einen Ausgang 156 des Komparators ist eine in Sperrichtung gepolte Diode 157 gelegt, die mit der Leitung 112 über eine Leitung 158 verbunden ist.

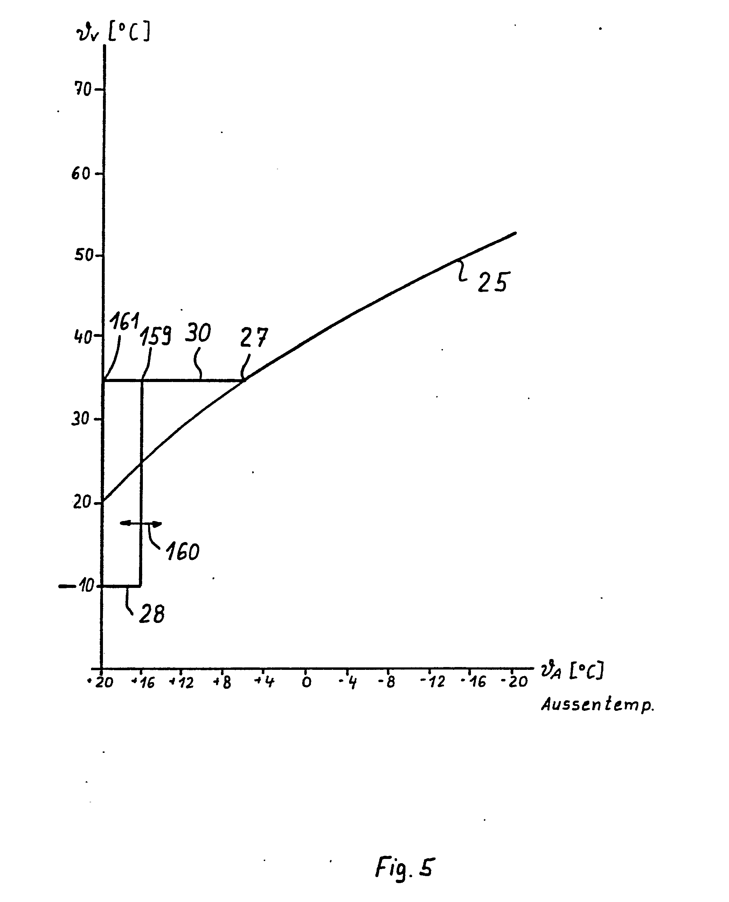

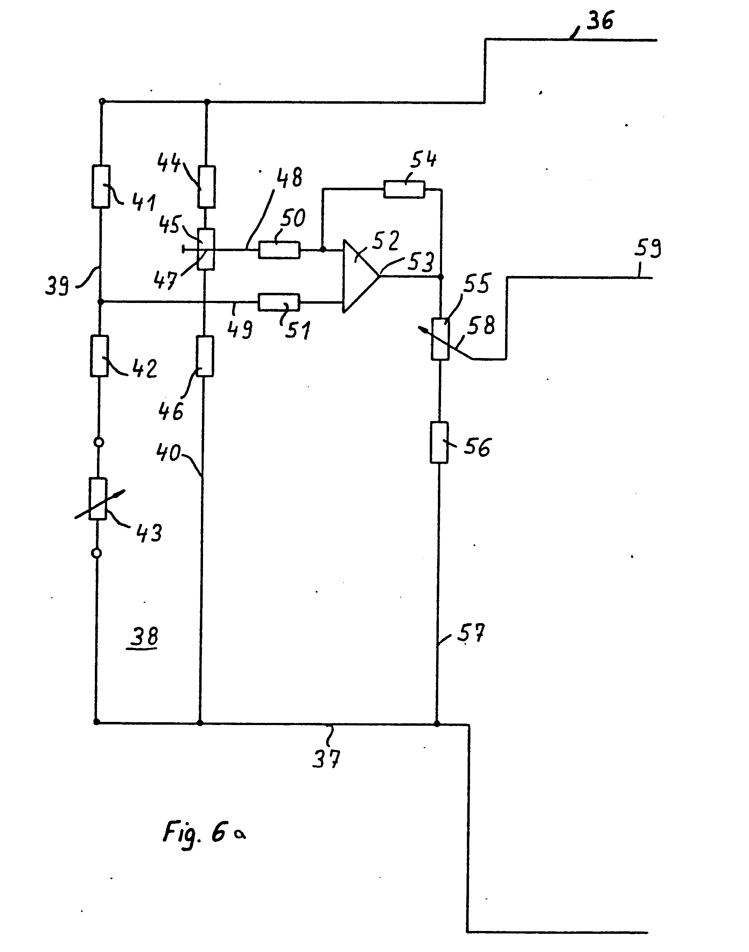

Die Funktion dieser Schaltung wird nun anhand des Diagramms der Figur 5 näher erläutert. Hier ist in der Abszisse die Außentemperatur 9A in °C von + bis -20°C aufgetragen, in der Ordinate die Vorlauftemperatur. Dargestellt ist wieder die Heizkurve 25, die, von tiefen Außentemperaturen kommend, bis zum Punkt 27 fällt, an den sich die Kurve gemäß dem Minimumbegrenzungswert 30 anschließt. Auf dieser Kurve ist ein Punkt 159 vorgesehen, an dem die Kurve bis zum Solltiefwert 28 fällt. Dieser Punkt 59 ist im einem Bereich 160 einstellbar, wobei der tiefste Einstellpunkt bis zu einem Punkt 161 reicht. Die Einstellung des Bereichs 160 geschieht durch den Schleifer 151 des Potentiometers 149. In dem Komparator 153 wird über dem Eingang 154 die Außentemperatur mit einem frei wählbaren Spannungswert verglichen. Für tiefe Außentemperaturen gilt das Abfahren der Heizkurve 25, bei steigenden Außentemperaturen wird der Punkt 27 erreicht, worauf die Minimumbegrenzung wirksam wird. Wenn der Schaltpunkt 159 im eingestellten Bereich 160 erreicht ist, kippt der Komparator 153, so daß auf die Leitung 106 über die Leitungen 158 und 112 negatives Potential gegeben wird, so daß der Sollwert von der Kurve 30 auf dem Solltiefwert gemäß der Kurve 20 herunterspringt, daß heißt die Heizungsanlage praktisch ausgeschaltet wird.

## Patentansprüche

Verfahren zum Steuern der Vor- oder Rücklauftemperatur oder einer davon abgeleiteten Temperatur eines in einer Heizungsanlage zirkulierenden Heizmediums, bei dem in einem mit einem Außentemperaturfühler (23, 69) versehenen Steuergerät (14) ein Steuersignal für eine der genannten Temperaturen beeinflussende Stellmittel der Heizungsanlage erzeugt werden, durch welches die betreffende Temperatur des Heizmediums in einem ersten Bereich der Außentemperatur in Abhängigkeit von dieser gemäß einer durch das Steuergerät vorgegebenen stetigen funktionalen Beziehung zwischen der Außentemperatur und der betreffenden Temperatur des Heizmediums verändert wird und durch welches die betreffende Temperatur ferner in einem sich zu höheren Außentemperaturen hin an den ersten Bereich anschließenden zweiten Bereich der Außentemperatur auf einen konstanten Minimalwert gehalten wird, der dem untersten durch die genannte Beziehung vorgegebenen Wert der betreffenden Temperatur im ersten Bereich entspricht, dadurch gekennzeichnet, daß die betreffende Temperatur des Heizmediums durch das Steuersignal in einem dritten Bereich der Außentemperatur, der sich zu höheren Temperaturen hin an den zweiten Bereich anschließt, auf einen unter dem Minimalwert sowie unter den von der genannten Beziehung vorgegebenen Werten liegenden konstanten Tiefwert abgesenkt wird.

## Claim

A process of controlling the flow or return temperature or a temperature derived therefrom of a heating fluid which circulates in a heating system, wherein a controller (14) provided with an outdoor temperature sensor (23, 69) generates a control signal for a final control element, which is included in the heating system and controls one of said temperatures in such a manner that a change of the respective tempereture of the heating fluid is effected in dependence on the outdoor temperature when the latter is in a first range and said change is effected in dependence on a continuous functional relationship between the outdoor temperature and the respective temperature of the heating fluid, which relationship is determined by the controller, said final control element holds the respective temperature at a constant minimun value when the outdoor temperature is in a second range, which is above and adjoins the first range, and said mininum value corresponds to the lowermost value of said temperature which is determined by said relstionship in the first range, characterized in that the respective temperature of the heating fluid is lowered by the control signal to a constant low value, which is below the minimum value and below the values determined by said relationship, when the outdoor temperature is in a third range, which is above and the second range.

## Revendication

Procédé pour la régulation de la température de départ ou de retour, ou d'une température dérivée, d'un fluide chauffant circulant dans une installation de chauffage, où un dispositif régulateur (14) muni d'une sonde thermométrique d'extérieur (23, 69), envoie un signal à des organes de réglage de l'installation de chauffage, agissant sur l'une des températures en ce sens que la température du fluide chauffant est variée, en fonction d'une première plage de température extérieure, suivant un rapport fonctionnel continu entre ladite température extérieure et la température du fluide chauffant, et que la température du fluide chauffant, à l'intérieur d'une deuxième plage de températures extérieures plus élevées, est maintenue à une valeur minimale constante correspondant à la valeur la plus basse résultant du rapport précité des températures dans la première plage, caractérisé par le fait que la température considérée du fluide chauffant est ramenée par le signal du dispositif régulateur, à l'intérieur d'une troisième plage de températures extérieures encore plus élevées, une valeur constante inférieure à la valeur minimale précitée et aux valeurs déterminées par le rapport ci-dessus mentionné.

Fig. 2

Fig. 3

Fig. 4

Fig. 5

Fig. 6 a

Fig. 7a

0 103 859

Fig. 7 b

Fig. 8 a

0 103 859

Fig. 8b

21

0 103 859

Fig. 9 a

23

0 103 859

Fig. 9 b